# EUROPÄISCHE PATENTSCHRIFT

(11) **EP 4 321 332 B1**
(45) Veröffentlichungstag und Bekanntmachung des Hinweises auf die Patenterteilung: **14.01.2026**
(21) Anmeldenummer: 23176609.8
(22) Anmeldetag: 01.06.2023
(51) Int. Cl.: B29D 30/06, B60C 11/11, B60C 11/12, B60C 11/13

(54) **MATRIZE FÜR EINE REIFENFORM, FORMEINSATZ FÜR EINE REIFENFORM, REIFENFORM UND VERFAHREN ZUR HERSTELLUNG EINER MATRIZE FÜR EINE REIFENFORM**
DIE FOR TIRE MOLD, MOLD INSERT FOR TIRE MOLD, TIRE MOLD, AND METHOD FOR MANUFACTURING DIE FOR TIRE MOLD
MATRICE POUR MOULE DE PNEU, INSERT DE MOULE POUR MOULE DE PNEU, MOULE DE PNEU ET PROCÉDÉ DE FABRICATION DE MOULE DE PNEU

(30) Priorität: 08.06.2022 DE 102022114361
(43) Veröffentlichungstag der Anmeldung: 14.02.2024
(73) Patentinhaber: Compagnie Générale des Etablissements Michelin, 63000 Clermont-Ferrand (FR)
(72) Erfinder: Popp, Sebastian, 36100 Petersberg (DE); Vögler, Wolfgang, 36132 Eiterfeld (DE)
(74) Vertreter: M.F.P. Michelin

(56) Entgegenhaltungen:
- CA-A1- 2 929 902
- JP-A- H02 303 809
- JP-B2- 2 754 036

## Beschreibung

Die Erfindung betrifft eine Matrize für eine Reifenform zum Vulkanisieren von Reifenrohlingen, einen Formeinsatz für eine Reifenform zum Vulkanisieren von Reifenrohlinge, eine Reifenform zum Vulkanisieren von Reifenrohlingen und ein Verfahren zur Herstellung einer Matrize für eine Reifenform zum Vulkanisieren von Reifenrohlingen, wobei die Matrize eine Negativform einer profilierten Lauffläche eines Reifens ausbildet, wobei die Matrize eine Formschale und zumindest ein daran angeordnetes Lamellenblech aufweist, wobei die Formschale eine Forminnenseite und das Lamellenblech einen Steg der Negativform ausbildet, wobei in der Formschale ein Schlitz ausgebildet ist, wobei das Lamellenblech in den Schlitz eingesetzt und an der Formschale befestigt ist.

Derartige Matrizen sind aus dem Stand der Technik hinreichend bekannt und dienen zum Auskleiden einer Reifenform, die zum Vulkanisieren von Reifenrohlingen verwendet wird. Um eine profilierte Lauffläche eines Reifens auszubilden, insbesondere feine Profilrillen der Lauffläche, werden dünne Lamellenbleche an einer Formschale der Matrize befestigt.

Die Lamellenbleche bilden an einer Forminnenseite der Formschale jeweils einen Steg der Negativform aus. Da die Lamellenbleche zumindest dünner als 0,5 mm ausgebildet sind, lassen sie sich kaum durch spanende Bearbeitung der Formschale kostengünstig herstellen. Es ist daher ebenfalls bekannt, in der Formschale eine Mehrzahl von Schlitzen auszubilden, innerhalb derer die Lamellenbleche jeweils befestigt werden. Eine Befestigung der Lamellenbleche in den jeweiligen Schlitzen erfolgt dabei regelmäßig mittels eines Klebermaterials oder Verschweißen mit dem Material der Formschale von der Forminnenseite her, wobei auf der Forminnenseite in dem Schlitz eine Schweißnaht bzw. Klebenaht ausgebildet wird. Wesentlich dabei ist, dass sich ein Lamellenblech nicht aus dem Schlitz lösen kann, wenn ein vulkanisierter Reifen aus der Reifenform entfernt wird. Beim Vulkanisieren wird ein Reifenrohling in die Reifenform eingelegt, wobei das Material der Lauffläche infolge von Temperatureinwirkungen soweit plastifiziert wird, dass die Lamellenbleche in das Material der Lauffläche eindringen können, derart, dass die Negativform bzw. die Forminnenseite von dem Material der Lauffläche vollständig ausgefüllt bzw. bedeckt wird. Da dann in Zwischenräumen zwischen Lamellenblechen oder Profilrillen der Negativform Lufteinschlüsse entstehen, muss die Reifenform regelmäßig beim Vulkanisieren entlüftet werden. In der Reifenform bzw. der Forminnenseite sind dazu vergleichsweise dünne Bohrungen ausgebildet, über die Luft entweichen kann. Das Material der Lauffläche dringt zum Teil beim Vulkanisieren in diese Bohrungen ein, sodass bei einem fertig ausgebildeten und geformten Reifen auf der Lauffläche noch fadenähnliche Materialreste aus diesen Bohrungen sichtbar sein können.

Nachteilig bei den bekannten Matrizen ist, dass sich die Lamellenbleche bei einer Herstellung einer Matrize mit vergleichsweise sehr eng stehenden Lamellenblechen bzw. vergleichsweise sehr engen Zwischenräumen zwischen den Lamellenblechen aufgrund von eingeschränkten Platzverhältnissen nur mit einem hohen Aufwand oder oftmals sogar gar nicht von der Forminnenseite her mit der Formschale verschweißen bzw. verkleben lassen. Zudem hinterlassen die beim Verkleben bzw. Verschweißen zwischen den Lamellenblechen und der Formschale bzw. der Forminnenseite ausgebildeten Klebenähte bzw. Schweißnähte auf einem unter Verwendung einer derartigen Matrize hergestellten Reifen, insbesondere auf einer Lauffläche des Reifens, regelmäßig Spuren in Form von Abdrücken oder dergleichen, welche abnehmerseitig unerwünscht sind.

Weiter ist aus der DE 10 2016 204 416 A1 eine gattungsgemäße Matrize für eine Reifenform zum Vulkanisieren von Reifenrohlingen bekannt, wobei Lamellenbleche der Matrize formschlüssig an einer Formschale der Matrize befestigt sind. Zur formschlüssigen Befestigung der Lamellenbleche an der Formschale bilden die Lamellenbleche jeweils eine durch einen oder mehrere Trennschlitze ausgebildete Lasche aus, welche nach einem Einsetzen der Lamellenbleche in in der Formschale ausgebildete Schlitze aus einer Schlitzebene herausgebogen werden können. Die Laschen liegen nach einem Umbiegen dann insbesondere an einer Formrückseite der Formschale an, sodass die Lamellenbleche nicht mehr aus den Schlitzen herausgezogen werden können und spielfrei zwischen einer Forminnenseite der Formschale und der Formrückseite verspannt sind.

Nachteilhaft bei einer derartigen Matrize ist jedoch, dass eine Verbindungsfestigkeit einer derartigen formschlüssigen Verbindung regelmäßig nicht ausreichend groß ist, sodass sich die Lamellenbleche aus den Schlitzen lösen können, insbesondere wenn ein vulkanisierter Reifen aus einer eine derartige Matrize umfassenden Reifenform entfernt wird. Infolgedessen müssen aus den Schlitzen gelöste Lamellenbleche, insbesondere nach einem Entfernen eines Reifens aus der Reifenform, regelmäßig wieder an der Formschale befestigt werden, was aufwändig ist. Auch kann es passieren, dass eine Lasche durch ein Lösen eines Lamellenblechs aus einem Schlitz beschädigt wird und das Lamellenblech mithin sogar ausgewechselt werden muss.

Eine weitere gattungsgemäße Matrize geht aus der JP 2 754036 B2 hervor.

Die CA 2 929 902 A1 offenbart eine Reifenform zum Vulkanisieren von Reifenrohlingen.

Der vorliegenden Erfindung liegt daher die Aufgabe zugrunde, eine Matrize für eine Reifenform, einen Formeinsatz für eine Reifenform, eine Reifenform und ein Verfahren zur Herstellung einer Matrize für eine Reifenform vorzuschlagen, die bzw. der bzw. das im Hinblick auf die vorstehend beschriebenen Nachteile eine optimierte, insbesondere kostengünstigere, Herstellung eines Reifens ermöglicht.

Diese Aufgabe wird durch eine Matrize für eine Reifenform mit den Merkmalen des Anspruchs 1, einen Formeinsatz mit den Merkmalen des Anspruchs 12, eine Reifenform mit den Merkmalen des Anspruchs 14 und ein Verfahren zur Herstellung einer Matrize für eine Reifenform mit den Merkmalen des Anspruchs 15 gelöst.

Die erfindungsgemäße Matrize für eine Reifenform zum Vulkanisieren von Reifenrohlingen bildet eine Negativform einer profilierten Lauffläche eines Reifens aus, wobei die Matrize eine Formschale und zumindest ein daran angeordnetes Lamellenblech aufweist, wobei die Formschale eine Forminnenseite und das Lamellenblech einen Steg der Negativform ausbildet, wobei in der Formschale ein Schlitz ausgebildet ist, wobei das Lamellenblech in den Schlitz eingesetzt und an der Formschale befestigt ist, wobei der Schlitz eine Formwandung der Formschale durchdringt und von der Forminnenseite zu einer Formrückseite der Formschale verläuft, wobei das Lamellenblech von der Formrückseite her stoffschlüssig an der Formschale befestigt ist.

Erfindungsgemäß ist das Lamellenblech in den Schlitz eingesetzt, wobei der Schlitz in der Formschale vorzugsweise orthogonal in der Formwandung verläuft, d.h. diese in einer radialen Richtung durchdringt. Vorzugsweise kann die Matrize eine Mehrzahl von Lamellenblechen aufweisen, welche jeweils in einen zugehörigen Schlitz in der Formschale eingesetzt sein können. Eine Höhe des Lamellenbleches ist so ausgebildet, dass das Lamellenblech auf der Forminnenseite einen Steg ausbildet, der eine Lamelle in der Lauffläche des Reifens ausbilden kann, und soweit in den Schlitz eingesetzt ist, dass eine stoffschlüssige Befestigung des Lamellenbleches an der Formschale bzw. in dem Schlitz von der Formrückseite her möglich ist. Vorzugsweise kann das Lamellenblech dabei mit der Formschale verschweißt sein bzw. werden. Alternativ kann das Lamellenblech mit der Formschale verklebt oder verlötet sein bzw. werden. Dabei kann ein bei der stoffschlüssigen Befestigung verwendeter Zusatzwerkstoff von der Formrückseite her teilweise in den Schlitz eindringen und das Lamellenblech stoffschlüssig mit der Formschale verbinden. Dadurch, dass das Lamellenblech von der Formrückseite her stoffschlüssig an der Formschale befestigt ist, ist eine Schweißnaht bzw. Klebenaht ausschließlich auf der Formrückseite in dem Schlitz ausgebildet. Mit anderen Worten ist die Forminnenseite vollständig frei von derartigen Schweißnähten bzw. Klebenähten, sodass bei einem unter Verwendung der erfindungsgemäßen Matrize hergestellten Reifen keine unerwünschten Spuren bzw. Abdrücke in einer Lauffläche des Reifens vorhanden sind. Zudem kann die stoffschlüssige Verbindung mit einer vergleichsweise hohen Verbindungsfestigkeit ausgebildet sein bzw. werden, sodass ein Lösen des Lamellenblechs aus dem Schlitz, insbesondere beim Entfernen eines vulkanisierten Reifens aus einer die erfindungsgemäße Matrize umfassenden Reifenform, sicher vermieden werden kann. Darüber hinaus ermöglicht der Umstand, dass die Befestigung des Lamellenbleches an der Formschale von der Formrückseite her erfolgt, die Matrize grundsätzlich mit vergleichsweise sehr eng nebeneinanderstehenden Lamellenblechen auszubilden, weil Platzverhältnisse auf der Formrückseite erheblich weniger eingeschränkt sind als auf der Forminnenseite. Darüber hinaus kann ein Austausch des Lamellenbleches im Falle einer Beschädigung durch diesen Umstand einfacher durchgeführt werden, insbesondere auch weil ein Auftrennen der Schweißnaht bzw. Klebenaht und eine etwaige Nachbearbeitung des Schlitzes auf der Formrückseite keine nachteilhaften Auswirkungen auf die Forminnenseite entfalten können. Weiter kann vorgesehen sein, über den Schlitz, der die Formwandung durchdringt, eine die erfindungsgemäße Matrize umfassende Reifenform zu entlüften, wobei der Schlitz in diesem Fall nur insoweit, insbesondere mit einem bei der stoffschlüssigen Verbindung verwendeten Zusatzmaterial, verfüllt und abgedichtet werden kann, dass zwischen dem Lamellenblech und der Formschale in dem Schlitz Spalte vorhanden bleiben, durch welche Luft zur Entlüftung der Reifenform entweichen kann. Es ist dann nicht mehr erforderlich, Bohrungen zur Entlüftung der Formschale auszubilden, wodurch die Reifenform bzw. Matrize noch kostengünstiger herstellbar ist. Auch können dann die sonst üblichen fadenförmigen Materialreste auf der Lauffläche des Reifens entfallen. Im Ergebnis können Reifen mittels der erfindungsgemäßen Matrize im Hinblick auf die aus dem Stand der Technik bekannten Nachteile optimiert, insbesondere kostengünstiger, hergestellt werden.

Vorteilhafterweise kann der Schlitz einen sich von der Forminnenseite aus erstreckenden, ersten Abschnitt und einen sich von der Formrückseite aus erstreckenden, in den ersten Abschnitt mündenden zweiten Abschnitt aufweisen. Das Lamellenblech kann dann derart, vorzugsweise von der Forminnenseite her, in den Schlitz eingesetzt sein, dass es den ersten Abschnitt durchgreifend aus dem ersten Abschnitt in den zweiten Abschnitt ragen und sich in dem zweiten Abschnitt entlang einer Tiefenrichtung des Schlitzes zumindest teilweise erstrecken kann. Vorzugsweise kann der erste Abschnitt von der Forminnenseite her und der zweite Abschnitt von der Formrückseite her ausgebildet werden. Dabei kann der erste Abschnitt vor dem zweiten Abschnitt oder auch nach dem zweiten Abschnitt ausgebildet werden. Vorteilhafterweise kann der erste Abschnitt vor dem zweiten Abschnitt ausgebildet werden. Auch können beide Abschnitte von der Forminnenseite oder der Formrückseite her ausgebildet werden. Zur Ausbildung des Schlitzes kann vorteilhafterweise zunächst von der Forminnenseite her der erste Abschnitt ausgebildet werden, wobei darauffolgend der zweite Abschnitt von der Formrückseite her derart tief ausgebildet werden kann, bis der zweite Abschnitt auf den ersten Abschnitt trifft bzw. in diesen mündet. Der erste Abschnitt kann mit einer ersten Tiefe und der zweite Abschnitt mit einer zweiten Tiefe ausgebildet werden, wobei die erste Tiefe und die zweite Tiefe in Summe einem Abstand zwischen der Forminnenseite und der Formrückseite entsprechen können. Weiter kann der Schlitz in dem ersten Abschnitt mittels eines anderen Verfahrens hergestellt werden als der Schlitz in dem zweiten Abschnitt. Gleichwohl kann vorgesehen sein, dass der gesamte Schlitz ausschließlich von der Forminnenseite her oder von der Formrückseite her in einem Stück ausgebildet wird.

Vorteilhafterweise kann eine Tiefe des ersten Abschnitts bzw. die erste Tiefe 2 mm bis 10 mm und/oder eine Tiefe des zweiten Abschnitts bzw. die zweite Tiefe 8 mm bis 28 mm betragen. Diese Tiefe ist ausreichend, um das Lamellenblech sicher in dem Schlitz bzw. an der Formschale zu befestigen.

In einer Ausführungsform der Erfindung kann ein Verlauf des Schlitzes in dem ersten und/oder ein Verlauf des Schlitzes in dem zweiten Abschnitt einer Querschnittsform des Lamellenbleches folgend ausgebildet sein. Mit anderen Worten kann ein Verlauf des Schlitzes übereinstimmend mit einer Querschnittsform des Lamellenbleches ausgebildet sein. Beispielsweise kann der Schlitz dann bei einem rundbogenförmigen oder wellenförmigen Querschnitt des Lamellenbleches einen rundbogenförmigen oder wellenförmigen Verlauf aufweisen. Dadurch, dass der Verlauf des Schlitzes der Querschnittsform des Lamellenbleches folgen kann, kann ein zusätzlicher Formschluss zwischen dem Lamellenblech und der Formschale erreicht werden, wodurch die Verbindungsfestigkeit vorteilhaft erhöht werden kann. Zudem kann, wenn der Verlauf des Schlitzes zumindest in dem ersten Abschnitt der Querschnittsform des Lamellenbleches folgend ausgebildet ist, dann auch nahezu kein Material der Lauffläche beim Vulkanisieren in den Schlitz eindringen, sodass Materialrückstände auf der Lauffläche reduziert werden können. Vorteilhafterweise kann der Verlauf des Schlitzes ausschließlich in dem ersten Abschnitt der Querschnittsform des Lamellenbleches folgend ausgebildet sein, wobei der Verlauf des Schlitzes in dem zweiten Abschnitt ohne besondere Berücksichtigung der Querschnittsform des Lamellenbleches ausgebildet sein kann. Beispielsweise kann der Schlitz in dem zweiten Abschnitt dann als eine einfache Aussparung oder als ein Langloch ausgebildet sein, welche bzw. welches mit einer vergleichsweise geringen Fertigungszeit ausgebildet werden kann. Zur Ausbildung des Schlitzes kann dann zunächst von der Forminnenseite her der erste Abschnitt mit einem der Querschnittsform des Lamellenbleches folgenden Verlauf ausgebildet werden, wobei darauffolgend der zweite Abschnitt von der Formrückseite her in Gestalt der Aussparung bzw. des Langloches, beispielsweise durch eine Freifräsung, derart tief ausgebildet werden kann, bis der zweite Abschnitt auf den ersten Abschnitt trifft bzw. in diesen mündet.

Vorteilhafterweise kann also der Schlitz in dem zweiten Abschnitt als ein Langloch ausgebildet sein.

In einer konstruktiv vorteilhaften Ausgestaltung der Erfindung kann eine Länge des Lamellenbleches, bezogen auf eine Längserstreckung des Lamellenbleches, abschnittsweise größer als eine Länge des Schlitzes in dem ersten Abschnitt und/oder eine Länge des Schlitzes in dem zweiten Abschnitt ausgebildet sein. Enden des Lamellenbleches können dann einen Anschlag bzw. einen Vorsprung ausbilden, der beispielsweise an der Forminnenseite anliegen kann, wenn die Länge des Lamellenbleches abschnittsweise größer als die Länge des Schlitzes in dem ersten Abschnitt ausgebildet ist. Weiter kann eine Länge des Schlitzes in dem ersten Abschnitt größer als eine Länge des Schlitzes in dem zweiten Abschnitt ausgebildet sein. Dabei kann die Länge des Lamellenbleches abschnittsweise größer als die Länge des Schlitzes in dem zweiten Abschnitt ausgebildet sein. Dadurch kann der Anschlag bzw. Vorsprung des Lamellenbleches bzw. ein weiterer Abschlag bzw. weiterer Vorsprung des Lamellenbleches dann an einem zwischen dem ersten Abschnitt und dem zweiten Abschnitt ausgebildeten Absatz in dem Schlitz anliegen. Ein Fortsatz des Lamellenbleches kann dann in den zweiten Abschnitt ragen bzw. in diesem angeordnet sein. Dies kann eine sichere Befestigung des Lamellenbleches in dem Schlitz vorteilhaft unterstützen und eine geforderte Erstreckung des Lamellenbleches entlang seiner Höhe gewährleisten, um auf der Forminnenseite den Steg auszubilden. Weiter kann eine Länge des Lamellenbleches, insbesondere in einem über dem Anschlag bzw. Vorsprung befindlichen Zentralabschnitt des Lamellenbleches, derart bemessen sein, dass sich das Lamellenblech im Wesentlichen über eine gesamte Länge der Formschale bzw. zwischen Profilrillenstegen der Formschale erstrecken kann.

Vorteilhafterweise kann also eine Länge des Schlitzes in dem ersten Abschnitt größer als eine Länge des Schlitzes in dem zweiten Abschnitt ausgebildet sein. Gleichwohl kann die Länge des Schlitzes in dem ersten Abschnitt auch übereinstimmend mit der Länge des Schlitzes in dem zweiten Abschnitt ausgebildet sein.

Vorteilhafterweise kann ein Abstand zwischen der Forminnenseite und der Formrückseite 10 mm bis 30 mm betragen.

Weiter kann ein Abstand zwischen zwei benachbarten Lamellenblechen jeweils 1 mm bis 10 mm, 1 mm bis 5 mm oder 1 mm bis 3 mm betragen, wenn die Matrize eine Mehrzahl von Lamellenblechen aufweist. Auch ein Abstand zwischen einem Lamellenblech und einem benachbart, parallel zu dem Lamellenblech verlaufenden Profilrillensteg der Formschale kann vorteilhaft diese Maße aufweisen.

In einer Ausgestaltung der Erfindung kann der Schlitz mittels Fräsen und/oder Funkenerodieren ausgebildet sein. Insbesondere kann der erste Abschnitt und/oder der zweite Abschnitt mittels Fräsen und/oder Funkenerodieren ausgebildet sein.

Vorteilhafterweise kann das Lamellenblech, insbesondere innerhalb des Schlitzes, zumindest abschnittsweise einen rundbogenförmigen oder wellenförmigen Querschnitt aufweisen. Auch ist es möglich, dass das gesamte Lamellenblech den rundbogenförmigen oder wellenförmigen Querschnitt aufweist. Durch die rundbogenförmige oder wellenförmige Ausgestaltung des Querschnitts des Lamellenbleches innerhalb des Schlitzes kann das Lamellenblech dann je nach Ausgestaltung des Schlitzes in den Schlitz in Art einer Blattfeder geklemmt werden. Dadurch entsteht ein Formschluss, durch welchen die Verbindungsfestigkeit vorteilhaft erhöht werden kann. Darüber hinaus kann dann je nach Ausgestaltung des Schlitzes die Ausbildung von Spalten sichergestellt werden, welche zur Entlüftung der Reifenform verwendet werden können.

Weiter kann das Lamellenblech zumindest abschnittsweise an der Forminnenseite und/oder an einem in dem Schlitz bzw. zwischen dem ersten Abschnitt und dem zweiten Abschnitt ausgebildeten Absatz anliegen. Beispielsweise kann das Lamellenblech bezogen auf dessen Längserstreckung an dessen äußeren Enden an der Forminnenseite anliegen. Dadurch ist sichergestellt, dass das Lamellenblech in der gewünschten Position relativ zur Forminnenseiten an der Formschale positioniert ist. Das Lamellenblech bildet dann den Steg der Negativform mit einer definierten Höhe aus und kann auch nicht weiter in den Schlitz hineinrutschen. Alternativ oder zusätzlich kann das Lamellenblech an dem in dem Schlitz zwischen dem ersten Abschnitt und dem zweiten Abschnitt ausgebildeten Absatz zumindest abschnittsweise anliegen, was ähnliche Vorteile mit sich bringt.

Weiter kann eine Schlitzbreite des Schlitzes und eine Blechdicke des Lamellenbleches so bemessen sein, dass ein Spaltkanal bzw. die Spalte zwischen dem Lamellenblech und dem Schlitz bzw. der Formschale ausgebildet werden kann bzw. können. Über den Spaltkanal wird es dann möglich, die Reifenform zu entlüften. Eine Breite des Spaltkanals kann dabei besonders dünn sein, da über eine Länge des Spaltkanals entlang des Schlitzes dennoch ein besonders großer Querschnitt des Spaltkanals zur Entlüftung ausgebildet werden kann. Wenn der Spaltkanal besonders dünn ist, dringt auch kaum Material der Lauffläche beim Vulkanisieren in den Spaltkanal ein, weshalb Materialrückstände auf der Lauffläche wesentlich reduziert werden können.

Der Spaltkanal kann 0,01 mm bis 0,1 mm, vorzugsweise 0,03 mm bis 0,04 mm breit sein. Ein Spaltkanal mit dieser Breite ist ausreichend, um eine adäquate Entlüftung des Reifenprofils bzw. eines Profilabschnitts zwischen zwei Lamellenblechen beim Vulkanisieren eines Reifenrohlings zu gewährleisten.

Der Spaltkanal kann daher auch als ein Entlüftungskanal zur Entlüftung der Reifenform ausgebildet sein. Eine Ausleitung der überschüssigen Luft aus der Reifenform kann über gegebenenfalls weitere Kanäle auf der Formrückseite der Formschale erfolgen.

Vorteilhafterweise ist das Lamellenblech derart in dem Schlitz angeordnet, dass dieses nicht auf der Formrückseite aus dem Schlitz herausragt. Das Lamellenblech kann auf der Formrückseite bündig mit der Formrückseite abschließen. Alternativ kann das Lamellenblech in dem Schlitz bezogen auf die Formrückseite zurückversetzt sein. In beiden Fällen wird die Matrize einfacher handhabbar, da das Lamellenblech von der Formrückseite her nicht beschädigt werden kann und bei der Montage der Matrize, insbesondere an einem Träger eines Formeinsatzes, nicht störend hervorragt.

Ferner kann die Matrize aus einer Mehrzahl von Formschalen ausgebildet sein. Die Matrize wird dann kostengünstiger herstellbar, da insbesondere bei komplexen Profilierungen der Lauffläche kleinere Abschnitte der Matrize bearbeitet werden können. Eventuelle Fehler bei der Bearbeitung der Matrize bzw. der Formschale verursachen somit geringere Ausschusskosten.

Der erfindungsgemäße Formeinsatz für eine Reifenform zum Vulkanisieren von Reifenrohlingen umfasst zumindest eine erfindungsgemäße Matrize.

In einer vorteilhaften Variante der Erfindung kann der Formeinsatz einen die Matrize tragenden bzw. haltenden, mit der Matrize, vorzugsweise mittels einer Schraubverbindung, lösbar verbindbaren Träger aufweisen, welcher an der Formrückseite anordbar sein kann. Folglich kann der Formeinsatz zweiteilig ausgebildet sein und als Bauteile die ein Formteil ausbildende Matrize und den ein Rückenteil ausbildenden Träger umfassen. Der Träger kann dann einen Rücken des Formeinsatzes ausbilden. Vorteilhafterweise kann der Träger den Schlitz an der Formrückseite überdecken, wodurch die Verbindungsstellen bzw. Verbindungsnähte vor äußeren Einflüssen und Einwirkungen geschützt werden können. Die Matrize kann auf einer Oberseite des Trägers derart angeordnet werden, dass die Formrückseite an der Oberseite zur Anlage kommen kann. Von einer Unterseite des Trägers kann die Matrize dann mittels beispielsweise zwei Schraubenmitteln mit dem Träger verschraubt werden, wozu Bohrungen in dem Träger bzw. der Matrize vorgesehen sein können. Weiter kann die Oberseite eine Vertiefung ausbilden, in welche die Matrize einsetzbar sein kann. Die lösbare Verbindung bzw. zweiteilige Ausgestaltung ermöglicht insbesondere auch einen separaten Austausch der Matrize oder des Trägers. Die Matrize kann ferner aus einer Mehrzahl von Formschalen mit jeweils Lamellenblechen ausgebildet sein, welche gemeinsam mit dem Träger lösbar verbunden bzw. verschraubt sein können. Auch können mehrere Matrizen an dem Träger angeordnet sein. Weiter ermöglicht das Vorsehen des lösbaren Trägers, dass der Schlitz, da dieser nur in der Formschale bzw. Matrize ausgebildet wird, vergleichsweise kurz ausgebildet werden kann. Eine Höhe der Matrize und des Trägers kann derart bemessen sein, dass deren Höhe in Summe einer Höhe eines herkömmlichen, einteiligen Formeinsatzes entspricht. Weiter können in dem Träger Bohrungen zur Entlüftung der Reifenform vorgesehen sein, welche in den Schlitz münden können. Vorteilhafterweise ist der Formeinsatz also zweiteilig ausgebildet. Gleichwohl kann der Formeinsatz auch einteilig ausgebildet sein. Die Formrückseite der Formschale kann dann einen Rücken des Formeinsatzes ausbilden oder zumindest mitausbilden.

Die erfindungsgemäße Reifenform zum Vulkanisieren von Reifenrohlingen weist eine Mehrzahl von Reifenformsegmenten auf, wobei die Reifenformsegmente jeweils aus einer Segmentbasis und einem erfindungsgemäßen Formeinsatz ausgebildet sind. So können große Reifenformsegmente einfach dadurch hergestellt werden, dass eine Mehrzahl von Formeinsätzen an der Segmentbasis befestigt wird. Ein Formeinsatz kann dann jeweils zumindest eine oder mehrere Matrizen aufweisen.

Bei dem erfindungsgemäßen Verfahren zu Herstellung einer Matrize für eine Reifenform zum Vulkanisieren von Reifenrohlingen wird von der Matrize eine Negativform einer profilierten Lauffläche eines Reifens ausgebildet, wobei an einer Formschale der Matrize zumindest ein Lamellenblech der Matrize angeordnet wird, wobei von der Formschale eine Forminnenseite und von dem Lamellenblech ein Steg der Negativform ausgebildet wird, wobei in der Formschale ein Schlitz ausgebildet wird, wobei das Lamellenblech in den Schlitz eingesetzt und an der Formschale befestigt wird, wobei der Schlitz eine Formwandung der Formschale durchdringend und von der Forminnenseite zu einer Formrückseite der Formschale verlaufend ausgebildet wird, wobei das Lamellenblech von der Formrückseite her stoffschlüssig an der Formschale befestigt wird. Zu den vorteilhaften Wirkungen des erfindungsgemäßen Verfahrens wird auf die Vorteilsbeschreibung der erfindungsgemäßen Matrize verwiesen.

Vorteilhafterweise kann das Lamellenblech von der Forminnenseite her in den Schlitz eingesetzt werden.

Vorteilhafterweise kann ein erster Abschnitt des Schlitzes von der Forminnenseite her und ein in den ersten Abschnitt mündender zweiter Abschnitt des Schlitzes von der Formrückseite her ausgebildet werden.

Vorteilhafterweise kann das Lamellenblech mit der Formschale verschweißt werden, wobei auf der Formrückseite in dem Schlitz bzw. zweiten Abschnitt eine Schweißnaht ausgebildet werden kann.

Weitere vorteilhafte Ausführungsformen des Verfahrens ergeben sich aus den Merkmalsbeschreibungen der auf den Vorrichtungsanspruchs 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine perspektivische Ansicht eines Formeinsatzes;
- **Fig. 2**: eine Aufsicht des Formeinsatzes;
- **Fig. 3**: eine Schnittansicht des Formeinsatzes entlang einer in der **Fig. 2** gezeigten Achse A-A;
- **Fig. 4**: eine Schnittansicht des Formeinsatzes entlang einer in der **Fig. 2** gezeigten Achse B-B;
- **Fig. 5**: eine Untersicht einer Matrize des Formeinsatzes;
- **Fig. 6**: eine Seitenansicht eines Lamellenbleches der Matrize;
- **Fig. 7**: eine Schnittansicht eines Formeinsatzes in einer weiteren Ausführungsform.

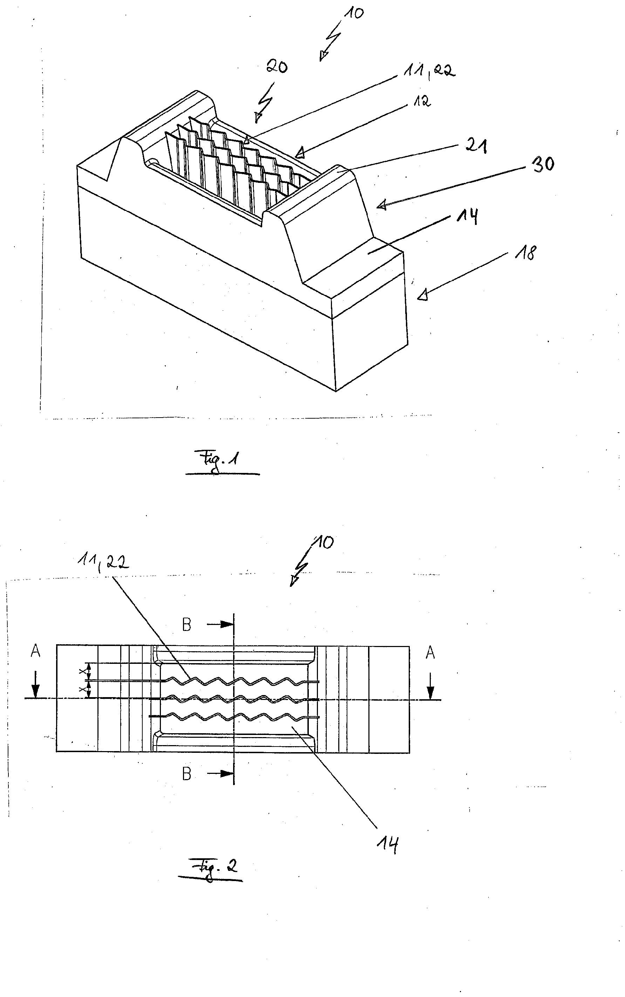

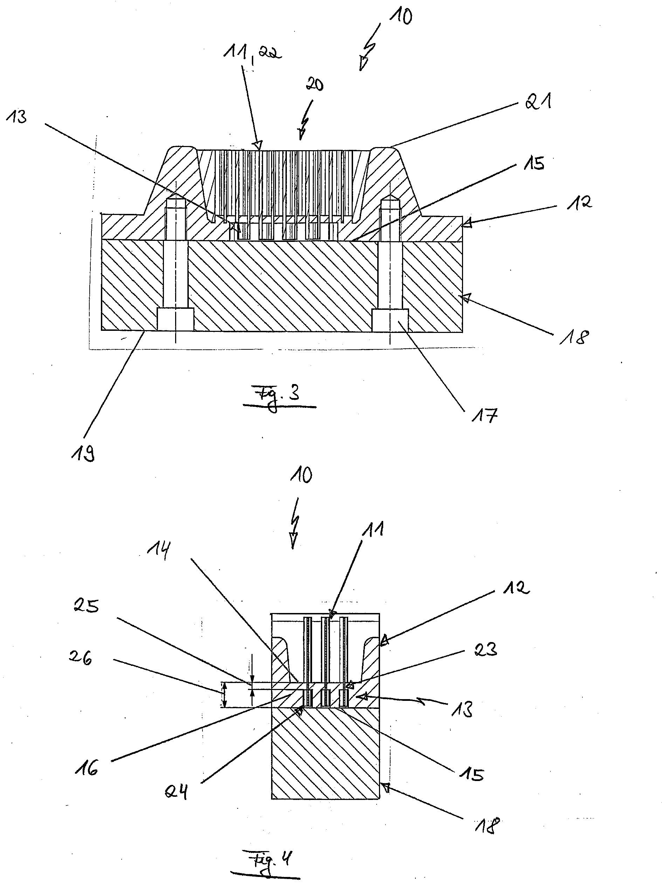

Eine Zusammenschau der **Fig. 1** bis **5** zeigt einen Formeinsatz 10, welcher eine Matrize 30 umfasst, welche eine Mehrzahl von vorliegend drei Lamellenblechen 11 aufweist, welche jeweils in in einer Formschale 12 der Matrize 30 ausgebildeten Schlitzen 13 angeordnet sind. Dabei verlaufen die Schlitze 13 in der Formschale 12 unter Durchdringung einer Formwandung 16 der Formschale 12 von einer Forminnenseite 14 der Formschale 12 zu einer Formrückseite 15 der Formschale 12. Weiter umfasst der Formeinsatz 10 einen mit der Matrize 30 mittels Schraubenmitteln 17 lösbar verbundenen Träger 18, welcher an der Formrückseite 15 angeordnet ist und einen Rücken des Formeinsatzes 10 ausbildet. Dabei greifen die Schraubenmittel 17 von einer Unterseite 19 des Trägers 18 her in den Formeinsatz 10 ein. Weiter bildet die Forminnenseite 14 eine Negativform 20 für einen hier nicht gezeigten zu vulkanisierenden Reifenrohling aus, wobei auf der Forminnenseite 14 Profilrillenstege 21 ausgebildet sind. Die Lamellenbleche 11 bilden ebenfalls jeweils einen Steg 22 der Negativform 20 aus.

Die Schlitze 13 bilden jeweils einen von der Forminnenseite 14 ausgebildeten ersten Abschnitt 23 und einen von der Formrückseite 15 her ausgebildeten zweiten Abschnitt 24 aus, wobei der zweite Abschnitt 24 in den ersten Abschnitt 23 mündet. Der erste Abschnitt 23 weist eine Tiefe 25 auf, wobei eine Tiefe des zweiten Abschnitts 24 durch einen Abstand 26 zwischen der Forminnenseite 14 und der Formrückseite 15 abzüglich der Tiefe 25 gegeben ist. Ein Verlauf der Schlitze 13 in dem ersten Abschnitt 23 ist einem rundbogenförmigen bzw. wellenförmigen Querschnitt der Lamellenbleche 11 folgend ausgebildet, wohingegen die Schlitze 13 in dem zweiten Abschnitt 24 jeweils als ein Langloch 27 ausgebildet sind. Dadurch ist es möglich, eine Fertigungszeit der Schlitze 13 zu verringern. Weiter sind die Lamellenbleche 11 von der Formrückseite 15 her in dem Schlitz 13 bzw. in dem zweiten Abschnitt 24 mit der Formschale 13 verschweißt, wobei auf der Formrückseite 15 in dem Schlitz 13 bzw. in dem zweiten Abschnitt 24 eine hier nicht gezeigte Schweißnaht ausgebildet ist. Dadurch, dass die Lamellenbleche 11 von der Formrückseite 15 her mit der Formschale 12 verschweißt sind, ist die Forminnenseite 14 vollständig frei von Schweißnähten. Weiter ermöglicht das Verschweißen von der Formrückseite 15 her, dass die Matrize 10 mit vergleichsweise sehr geringen Zwischenräumen x insbesondere zwischen den Lamellenblechen 11 ausgebildet werden kann.

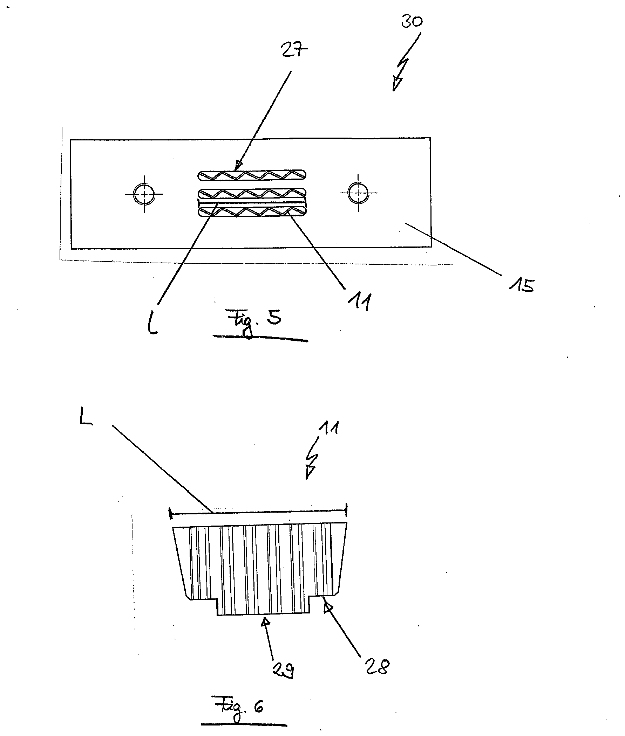

Die **Fig. 6** zeigt ein Lamellenblech 11, wobei eine obere Länge L des Lamellenbleches 11 größer ausgebildet ist als eine Länge l der Schlitze 13 in dem zweiten Abschnitt 24 bzw. der Langlöcher 27. Weiter bildet das Lamellenblech 11 einen Vorsprung 28 aus, der an einem jeweils in den Schlitzen 13 zwischen dem ersten Abschnitt 23 und dem zweiten Abschnitt 24 ausgebildeten, in den Figuren nicht gezeigten Absatz anliegen kann, wobei ein Fortsatz 29 des Lamellenbleches 11 in den zweiten Abschnitt 24 ragen kann. Dabei ist eine in den Figuren nicht gezeigte Länge der Schlitze 13 in dem ersten Abschnitt 23 größer als die Länge l.

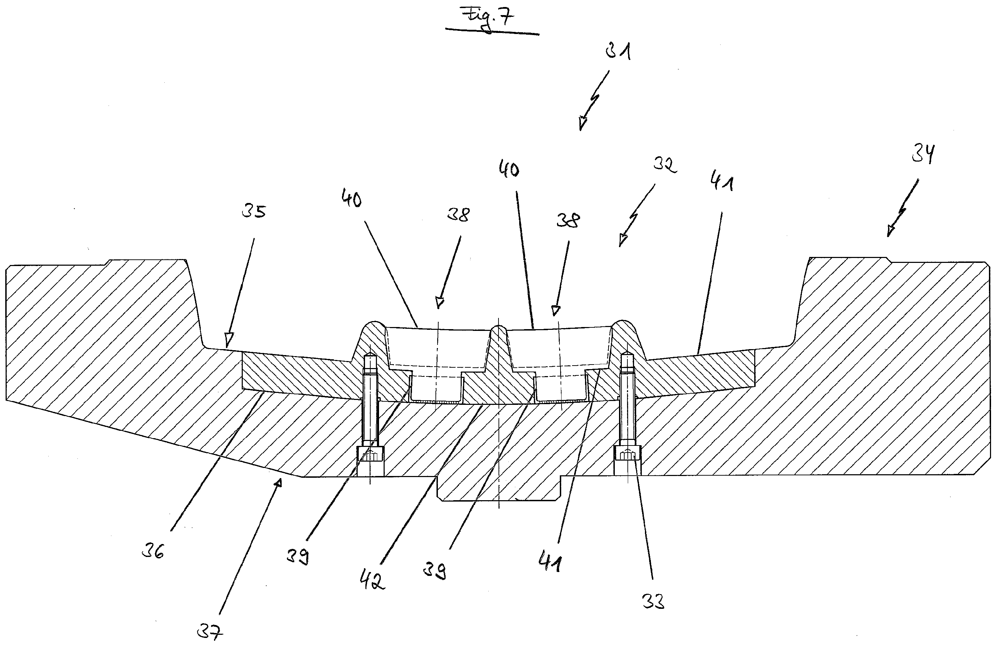

Die **Fig. 7** zeigt einen Formeinsatz 31, welcher eine Matrize 32 und einen mittels Schraubenmitteln 33 mit der Matrize 32 lösbar verbundenen Träger 34 umfasst, welcher einen Rücken des Formeinsatzes 31 ausbildet, wobei der Träger 34 auf einer Oberseite 35 des Trägers 34 eine Vertiefung 36 ausbildet, in welche die Matrize 32 eingesetzt ist. Die Schraubenmittel 33 greifen von einer Unterseite 37 des Trägers 34 in den Formeinsatz 31 ein. Weiter umfasst die Matrize 32 vorliegend zwei Formschalen 38 mit jeweils in jeweils in den Formschalen 38 ausgebildeten Schlitzen 39 eingesetzten Lamellenblechen 40. Dabei verlaufen die Schlitze 39 jeweils von einer Forminnenseite 41 der Formschalen 38 zu einer Formrückseite 42 der Formschalen 38. Weiter sind die Lamellenbleche 40 jeweils von der Formrückseite 42 her mit den Formschalen 38 verschweißt. Im Übrigen kann der Formeinsatz 31 wie der Formeinsatz 10 ausgebildet sein, so dass ergänzend hierzu auf die im Hinblick auf die **Fig. 1** bis **6** gemachten Ausführungen verwiesen wird.

## Patentansprüche

1. Matrize (30, 32) für eine Reifenform zum Vulkanisieren von Reifenrohlingen, wobei die Matrize eine Negativform (20) einer profilierten Lauffläche eines Reifens ausbildet, wobei die Matrize eine Formschale (12, 38) und zumindest ein daran angeordnetes Lamellenblech (11, 40) aufweist, wobei die Formschale eine Forminnenseite (14, 41) und das Lamellenblech einen Steg (22) der Negativform ausbildet, wobei in der Formschale ein Schlitz (13, 39) ausgebildet ist, wobei das Lamellenblech in den Schlitz eingesetzt und an der Formschale befestigt ist,
dadurch**gekennzeichnet**,
dass der Schlitz eine Formwandung (16) der Formschale durchdringt und von der Forminnenseite zu einer Formrückseite (15, 42) der Formschale verläuft, wobei das Lamellenblech von der Formrückseite her stoffschlüssig an der Formschale befestigt ist.

2. Matrize nach Anspruch 1,
dadurch**gekennzeichnet**,
dass der Schlitz (13, 39) einen sich von der Forminnenseite (14, 41) aus erstreckenden, ersten Abschnitt (23) und einen sich von der Formrückseite (15, 42) aus erstreckenden, in den ersten Abschnitt mündenden zweiten Abschnitt (24) aufweist.

3. Matrize nach Anspruch 2,
dadurch**gekennzeichnet**,
dass eine Tiefe (25) des ersten Abschnitts (23) 2 mm bis 10 mm und/oder eine Tiefe des zweiten Abschnitts (24) 8 mm bis 28 mm beträgt.

4. Matrize nach Anspruch 2 oder 3,
dadurch**gekennzeichnet**,
dass ein Verlauf des Schlitzes (13, 39) in dem ersten Abschnitt (23) und/oder ein Verlauf des Schlitzes (13, 39) in dem zweiten Abschnitt (24) einer Querschnittsform des Lamellenbleches (11, 40) folgend ausgebildet ist.

5. Matrize nach einem der Ansprüche 2 bis 4,
dadurch**gekennzeichnet**,
dass der Schlitz (13, 39) in dem zweiten Abschnitt (24) als ein Langloch (27) ausgebildet ist.

6. Matrize nach einem der Ansprüche 2 bis 5,
dadurch**gekennzeichnet**,
dass eine Länge des Lamellenbleches (11, 40) abschnittsweise größer als eine Länge des Schlitzes (13, 39) in dem ersten Abschnitt (23) und/oder eine Länge (l) des Schlitzes (13, 39) in dem zweiten Abschnitt (24) ausgebildet ist.

7. Matrize nach einem der Ansprüche 2 bis 6,
dadurch**gekennzeichnet**,
dass eine Länge des Schlitzes (13, 39) in dem ersten Abschnitt (23) größer als eine Länge (l) des Schlitzes in dem zweiten Abschnitt (24) ausgebildet ist.

8. Matrize nach einem der vorangehenden Ansprüche,
dadurch**gekennzeichnet**,
dass ein Abstand (26) zwischen der Forminnenseite (14, 41) und der Formrückseite (15, 42) 10 mm bis 30 mm beträgt.

9. Matrize nach einem der vorangehenden Ansprüche,
dadurch**gekennzeichnet**,
dass der Schlitz (13, 39) mittels Fräsen und/oder Funkenerodieren ausgebildet ist.

10. Matrize nach einem der vorangehenden Ansprüche,
dadurch**gekennzeichnet**,
dass das Lamellenblech (11, 40), insbesondere innerhalb des Schlitzes (13, 39), zumindest abschnittsweise einen rundbogenförmigen oder wellenförmigen Querschnitt aufweist.

11. Matrize nach einem der vorangehenden Ansprüche,
dadurch**gekennzeichnet**,
dass das Lamellenblech (11, 40) zumindest abschnittsweise an der Forminnenseite (14, 41) und/oder an einem in dem Schlitz (13, 39) ausgebildeten Absatz anliegt.

12. Formeinsatz (10, 31) für eine Reifenform zum Vulkanisieren von Reifenrohlingen, wobei der Formeinsatz zumindest eine Matrize (30, 32) nach einem der vorangehenden Ansprüche umfasst.

13. Formeinsatz nach Anspruch 12,
dadurch**gekennzeichnet**,
dass der Formeinsatz (10, 31) einen mit der Matrize (30, 32), vorzugsweise mittels einer Schraubverbindung, lösbar verbindbaren Träger (18, 34) umfasst, welcher an der Formrückseite (15, 42) anordbar ist.

14. Reifenform zum Vulkanisieren von Reifenrohlingen, wobei die Reifenform eine Mehrzahl von Reifenformsegmenten aufweist, wobei die Reifenformsegmente jeweils aus einer Segmentbasis und einem Formeinsatz (10, 31) nach einem der Ansprüche 12 oder 13 ausgebildet sind.

15. Verfahren zur Herstellung einer Matrize (30, 32) für eine Reifenform zum Vulkanisieren von Reifenrohlingen, wobei von der Matrize eine Negativform (20) einer profilierten Lauffläche eines Reifens ausbildet wird, wobei an einer Formschale (12, 38) der Matrize zumindest ein Lamellenblech (11, 40) der Matrize angeordnet wird, wobei von der Formschale eine Forminnenseite (14, 41) und von dem Lamellenblech ein Steg (22) der Negativform ausbildet wird, wobei in der Formschale ein Schlitz (13, 39) ausgebildet wird, wobei das Lamellenblech in den Schlitz eingesetzt und an der Formschale befestigt wird,
dadurch**gekennzeichnet**,
dass der Schlitz eine Formwandung (16) der Formschale durchdringend und von der Forminnenseite zu einer Formrückseite (15, 42) der Formschale verlaufend ausgebildet wird, wobei das Lamellenblech von der Formrückseite her stoffschlüssig an der Formschale befestigt wird.

16. Verfahren nach Anspruch 15,
dadurch**gekennzeichnet**,
dass das Lamellenblech (11, 40) von der Forminnenseite (14, 41) her in den Schlitz (13, 39) eingesetzt wird.

17. Verfahren nach Anspruch 15 oder 16,
dadurch**gekennzeichnet**,
dass ein erster Abschnitt (23) des Schlitzes (13, 39) von der Forminnenseite (14, 41) her und ein in den ersten Abschnitt mündender zweiter Abschnitt (24) des Schlitzes von der Formrückseite (15, 42) her ausgebildet wird.

18. Verfahren nach einem der Ansprüche 15 bis 17,
dadurch**gekennzeichnet**,
dass das Lamellenblech (11, 40) mit der Formschale (12, 38) verschweißt wird, wobei auf der Formrückseite (15, 42) in dem Schlitz (13, 39) eine Schweißnaht ausgebildet wird.

## Claims

1. A matrix (30, 32) for a tire mold for vulcanizing tire blanks, the matrix forming a negative mold (20) of a profiled tread of a tire, the matrix having a mold shell (12, 38) and at least one fin plate (11, 40) disposed thereon, the mold shell forming a mold inside (14, 41) and the fin plate forming a web (22) of the negative mold, a slit (13, 39) being formed in the mold shell, the fin plate being inserted into the slit and attached to the mold shell, **characterized in that**
the slit penetrates a mold wall (16) of the mold shell and extends form the mold inside to a mold back side (15, 42) of the mold shell, the fin plate being bonded to the mold shell from the mold back side.

2. The matrix according to claim 1,
**characterized in that**
the slit (13, 39) has a first portion (23) which extends from the mold inside (14, 41) and a second portion (24), which extends from the mold back side (15, 42) and ends in the first portion.

3. The matrix according to claim 2,
**characterized in that**
a depth (25) of the first portion (23) is 2 mm to 10 mm and/or a depth of the second portion (24) is 8 mm to 28 mm.

4. The matrix according to claims 2 or 3,
**characterized in that**
a shape of the slit (13, 39) in the first portion (23) and/or a shape of the slit (13, 39) in the second portion (24) follows a cross-sectional shape of the fin plate (11, 40).

5. The matrix according to one of claims 2 to 4,
**characterized in that**
the slit (13, 39) is an oblong hole (27) in the second portion (24).

6. The matrix according to one of claims 2 to 5,
**characterized in that**
a length of the fin plate (11, 40) is partially greater than a length of the slit (13, 39) in the first portion (23) and/or a length (l) of the slit (13, 39) in the second portion (24).

7. The matrix according to one of claims 2 to 6,
**characterized in that**
a length of the slit (13, 39) in the first portion (23) is greater than a length (l) of the slit (13, 39) in the second portion (24).

8. The matrix according to one of the preceding claims,
**characterized in that**
a distance (26) between the mold inside (14, 41) and the mold back side (15, 42) is 10 mm to 30 mm.

9. The matrix according to one of the preceding claims,
**characterized in that**
the slit (13,39) is formed by milling and/or spark erosion.

10. The matrix according to one of the preceding claims,
**characterized in that**
the fin plate (11, 40) at least partially has a round-arch-shaped or undulating cross section, in particular within the slit (13, 39).

11. The matrix according to one of the preceding claims,
**characterized in that**
the fin plate (11, 40) is at least partially in contact with the mold inside (14, 41) and/or a shoulder formed in the slit (13, 39).

12. A mold insert (10, 31) for a tire mold for vulcanizing tire blanks, **characterized in that**
the mold insert comprises at least one matrix (30, 32) according to one of the preceding claims.

13. The mold insert according to claim 12,
**characterized in that**
the mold insert (10, 31) comprises a support (18, 34) configured to be connected, preferably screwed, to the matrix (30, 32) in a detachable manner and to be disposed on the mold back side (15, 42).

14. A tire mold for vulcanizing tire blanks, the tire mold having a plurality of tire mold segments, the tire mold segments each being composed of a segment base and a mold insert (10, 31) according to claims 12 or 13.

15. A method for producing a matrix (30, 32) for a tire mold for vulcanizing tire blanks, the matrix forming a negative mold (20) of a profiled tread of a tire, at least one fin plate (11, 40) of the matrix being arranged on a mold shell (12, 38) of the matrix, the mold shell forming a mold inside (14, 41) and the fin plate forming a web (22) of the negative mold, a slit (13, 39) being formed in the mold shell, the fin plate being inserted into the slit and attached to the mold shell,
**characterized in that**
the slit is formed in such a manner that it penetrates a mold wall (16) of the mold shell and extends from the mold inside to a mold back side (15, 42) of the mold shell, the fin plate being bonded to the mold shell from the mold back side.

16. The method according to claim 15,
**characterized in that**
the fin plate (11, 40) is inserted into the slit (13, 39) from the mold inside (14, 41).

17. The method according to claims 15 or 16,
**characterized in that**
a first portion (23) of the slit (13, 39) is formed from the mold inside (14, 41) and a second portion (24) of the slit, which ends in the first portion, is formed from the mold back side (15, 42).

18. The method according to one of claims 15 to 17,
**characterized in that**
the fin plate (11, 40) is welded to the mold shell (12, 38), a weld being formed in the slit (13, 39) on the mold back side (15, 42).

## Revendications

1. Matrice (30, 32) pour un moule pour pneu pour vulcaniser des pneus crus, la matrice formant un moule négatif (20) d'une bande de roulement profilée d'un pneu, la matrice comportant une coquille de moule (12, 38) et au moins une tôle lamellaire (11, 40) disposée là-dessus, la coquille de moule formant une face intérieure de moule (14, 41) et la tôle lamellaire formant une traverse (22) du moule négatif, une fente (13, 39) étant formée dans la coquille de moule, la tôle lamellaire étant insérée dans la fente et fixée sur la coquille de moule,
**caractérisée en ce que**
la fente pénètre une paroi de moule (16) de la coquille de moule et s'étend de la face intérieure de moule vers une face arrière de moule (15, 42) de la coquille de moule, la tôle lamellaire étant fixée par liaison matérielle sur la coquille de moule à partir de la face arrière de moule.

2. Matrice selon la revendication 1,
**caractérisée en ce que**
la fente (13, 39) comporte une première section (23) s'étendant à partir de la face intérieure de moule (14, 41), et une deuxième section (24) s'étendant à partir de la face arrière de moule (15, 42) et débouchant dans la première section.

3. Matrice selon la revendication 2,
**caractérisée en ce que**
une profondeur (25) de la première section (23) est de 2 mm à 10 mm, et/ou une profondeur de la deuxième section (24) est de 8 mm à 28 mm.

4. Matrice selon la revendication 2 ou 3,
**caractérisée en ce que**
un tracé de la fente (13, 39) dans la première section (23) et/ou un tracé de la fente (13, 39) dans la deuxième section (24) est formé suivant une forme de section transversale de la tôle lamellaire (11, 40).

5. Matrice selon l'une des revendications 2 à 4,
**caractérisée en ce que**
la fente (13, 39) dans la deuxième section (24) a une forme de trou oblong (27).

6. Matrice selon l'une des revendications 2 à 5,
**caractérisée en ce que**
une longueur de la tôle lamellaire (11, 40) est partiellement plus grande qu'une longueur de la fente (13, 39) dans la première section (23) et/ou une longueur (l) de la fente (13, 39) dans la deuxième section (24).

7. Matrice selon l'une des revendications 2 à 6,
**caractérisée en ce que**
une longueur de la fente (13, 39) dans la première section (23) est plus grande qu'une longueur (1) de la fente dans la deuxième section (24).

8. Matrice selon l'une des revendications précédentes,
**caractérisée en ce que**
une distance (26) entre la face intérieure de moule (14, 41) et la face arrière de moule (15, 42) est de 10 mm à 30 mm.

9. Matrice selon l'une des revendications précédentes,
**caractérisée en ce que**
la fente (13, 39) est formée par fraisage et/ou par érosion par étincelage.

10. Matrice selon l'une des revendications précédentes,
**caractérisée en ce que**
la tôle lamellaire (11, 40) comporte une section transversale en forme d'arc en plein cintre ou ondulée, au moins partiellement, en particulier à l'intérieur de la fente (13, 39).

11. Matrice selon l'une des revendications précédentes,
**caractérisée en ce que**
la tôle lamellaire (11, 40) est en appui au moins partiellement sur la face intérieure de moule (14, 41) et/ou sur un décrochement formé dans la fente (13, 39).

12. Insert de moule (10, 31) pour un moule pour pneu pour vulcaniser des pneus crus, l'insert de moule comprenant au moins une matrice (30, 32) selon l'une des revendications précédentes.

13. Insert de moule selon la revendication 12,
**caractérisée en ce que**
l'insert de moule (10, 31) comprend un support (18, 34) apte à être relié à la matrice (30, 32) de manière amovible, de préférence au moyen d'un raccord à vis, apte à être disposé sur la face arrière de moule (15, 42).

14. Moule pour pneu pour vulcaniser des pneus crus, le moule pour pneu comportant une pluralité de segments de moule pour pneu, les segments de moule pour pneu étant respectivement formés à partir d'une base de segment et d'un insert de moule (10, 31) selon l'une des revendications 12 ou 13.

15. Procédé de fabrication d'une matrice (30, 32) pour un moule pour pneu pour vulcaniser des pneus crus, la matrice formant un moule négatif (20) d'une bande de roulement profilée d'un pneu, au moins une tôle lamellaire (11, 40) de la matrice étant disposée sur une coquille de moule (12, 38) de la matrice, la coquille de moule formant une face intérieure de moule (14, 41), et la tôle lamellaire formant une traverse (22) du moule négatif, une fente (13, 39) étant formée dans la coquille de moule, la tôle lamellaire étant insérée dans la fente et fixée sur la coquille de moule, **caractérisée en ce que**
la fente est formée de manière pénétrant une paroi de moule (16) de la coquille de moule et s'étendant de la face intérieure de moule vers une face arrière de moule (15, 42) de la coquille de moule, la tôle lamellaire étant fixée par liaison matérielle sur la coquille de moule à partir de la face arrière de moule.

16. Procédé selon la revendication 15,
**caractérisée en ce que**
la tôle lamellaire (11, 40) est insérée dans la fente (13, 39) à partir de la face intérieure de moule (14, 41).

17. Procédé selon la revendication 15 ou 16,
**caractérisée en ce que**
une première section (23) de la fente (13, 39) est formée à partir de la face intérieure de moule (14, 41), et une deuxième section (24) de la fente débouchant dans la première section est formée à partir de la face arrière de moule (15, 42).

18. Procédé selon l'une des revendications 15 à 17,
**caractérisée en ce que**
la tôle lamellaire (11, 40) est soudée sur la coquille de moule (12, 38), une soudure étant formée dans la fente (13, 39) sur la face arrière de moule (15, 42).
